# EUROPEAN PATENT SPECIFICATION

(11) **EP 2 429 352 B1**
(45) Date of publication and mention of the grant of the patent: **22.08.2018**
(21) Application number: 09801527.4
(22) Date of filing: 17.12.2009
(51) Int. Cl.: A47J 27/14, A47J 27/08

(54) **A COOKING APPARATUS**
KOCHGERÄT
APPAREIL DE CUISSON

(30) Priority: 29.10.2009 GB 0918945; 18.12.2008 GB 0823043
(43) Date of publication of application: 21.03.2012
(73) Proprietor: Benest, Roger Sydney, St Helier, Jersey JEZ 4SB (GB); Shami, Subina, Jersey, Channel Islands JE3 9BY (GB)
(72) Inventor: Benest, Roger Sydney, St Helier, Jersey JEZ 4SB (GB); Shami, Subina, Jersey, Channel Islands JE3 9BY (GB)
(74) Representative: Harrison IP Limited
(86) International application number: PCT/GB2009/002904
(87) International publication number: WO 2010/070287

(56) References cited:
- DE-C1- 3 346 016
- US-A- 4 503 502
- US-A- 4 649 810
- US-A- 5 819 636

## Description

The present invention relates to a cooking apparatus, and in particular to an automated cooker for preparing food consisting of a number of ingredients.
Labour saving devices for assisting in the preparation of food are common to both home and professional kitchens. Typical devices such as food processors and blenders are used to prepare ingredients prior to cooking. However, the cooking process itself is conventionally undertaken manually, in order that the food can be constantly monitored, for example to check food temperature and avoid burning. In addition, different ingredients require different cooking times and must therefore be periodically added at various different stages of the cooking process, which again requires constant monitoring and input from the chef. This requires a significant time investment, and therefore deters those who are time pressed from preparing home cooked meals. In the professional kitchen environment, constant supervision of dishes increases labour requirements and therefore increases costs.
Automatic cooking devices have therefore been developed to automate the process of adding ingredients to a dish during cooking, and to control the cooking process. US 4,649,810 and US 5,819,636 both describe automated cookers comprising a rotating carousel having multiple compartments for containing various ingredients. The carousel is located over a cooking vessel, and comprises a fixed opening in its base positioned over a corresponding opening in the cooking vessel. Rotation of the carousel moves the various compartments over the opening causing the ingredients therein to deposit into the cooking vessel, and the carousel is controlled to deposit the ingredients at pre-determined intervals during the cooking process. Such cooking devices require rotational drive mechanisms which increase complexity, weight and cost, as well as increasing the size of the device, which is particularly undesirable for home kitchen applications where cost and appliance size are important considerations. In addition, in a carousel delivery system, the order in which the ingredients are delivered is limited by the direction of rotation of the carousel and the order in which compartments are preloaded, and as such the cooking program may not be varied once initiated.

DE 33 46 016 and US 4,503,502 both describe cooking devices having a plurality of ingredient storage containers connected to a cooking chamber and arranged to selectively dispense ingredients into the cooking chamber. Each storage container has a closure member selectively movable between an open position in which the container is open to the cooking chamber and a closed position in which the container is sealed from the cooking chamber.
It is therefore desirable to provide an improved cooking apparatus which addresses the above described problems and/or which offers improvements generally.
According to the present invention there is provided a cooking apparatus comprising:
a plurality of walls defining a cooking chamber;
heating means for heating ingredients contained within the cooking chamber; and
a plurality of ingredient storage containers connected to the cooking chamber and arranged in use selectively to dispense ingredients held therein into the cooking chamber,
wherein each ingredient storage container comprise a separate corresponding closure member selectively movable between an open position in which the ingredient storage container is open to the cooking chamber and a closed position in which the ingredient storage container is sealed from the cooking chamber;
wherein the cooking chamber is a sealed chamber in sealed connection with the ingredient storage containers such that the cooking chamber and the storage containers define a pressure vessel;
the apparatus further comprising an actuator for moving the plurality of closure members between the open and closed positions;
wherein the actuator comprises a plurality of push rods each connected to a corresponding one of the plurality of closure members, the push rods being movable between a retracted position in which the corresponding closure member is held in the closed position and an extended position in which the corresponding closure member is caused to move to the open position;
wherein each closure member includes a valve, and wherein movement of the corresponding push rod to the extended position causes the valve to open creating a fluid pathway between the cooking chamber and the storage container for the ingress of gas into the storage chamber.

Providing each storage container with a separate corresponding closure member enables each storage container to be selectively and independently opened at any time during the cooking process to dispense the ingredients contained therein. In addition, as each storage container has a dedicated closure member, the storage containers are able to remain fixed relative to the cooking chamber in use, rather than needing to rotate to a single shared dispensing aperture as in the carousel arrangements of the prior art. As such a rotating carousel arrangement is not required, which removes the need for a rotational drive mechanism and thereby reducing cost and making the cooking apparatus more durable and easier to maintain, as well as enabling a more compact arrangement. Opening of the storage containers into the cooking chamber may be effected manually or automatically.

The cooking chamber may be a sealed chamber in sealed connection with the ingredient storage containers such that the cooking chamber and the storage containers define a pressure vessel. As such, the cooking apparatus may provide pressurised cooking, with heating of the ingredients causing increased pressure within the sealed cooking vessel, thereby reducing cooking time. The cooking apparatus may also be provided with a pump connected to the cooking chamber for pre-pressurising the cooking chamber prior to heating. In this way marinating ingredients may be introduced into the cooking chamber prior to heating, with the pre-pressurisation being used to significantly reduce the required marinating time.

The cooking chamber may comprise an opening for access thereto which is selectively closable by a sealed chamber closure member. The sealed chamber closure member enables access to the chamber to remove the food once cooked. The plurality of walls may include a removable lid which defines the sealed chamber closure member. The lid may be fully removable or in hinged connection with the side walls of the cooking chamber. Alternatively the chamber closure member may be a sealed door provided in the side wall.

The storage containers may be connected to and extend through the lid such that when the lid is closed the opening of each storage container is contiguous and in open connection with the cooking chamber when the corresponding closure member is in the open position. In this way, the storage containers open directly into the cooking chamber with no space therebetween, enabling efficient deposition of ingredients into the cooking chamber. In addition, connection of the storage containers to the lid enables the containers to be conveniently filled by removing and inverting the lid. The storage containers may be integrally connected to the lid, or may be removable.

The closure members may be formed of a thermally insulating material, to prevent cooking of the ingredients prior to release.

The plurality of ingredient storage containers may comprise a single storage enclosure having multiple partitions therein defining the plurality of ingredient storage containers.

Opening of the valve by the push rod causes pressurised air within the cooking chamber to flow into the storage container thereby raising the pressure within the storage container to cause the closure member to open. The actuator is only required to move the valve member and not the entire closure member, with the pressure equalisation and the weight of the closure member and ingredients within the container providing the opening force. Therefore a lower actuation force is required which increases the efficiency of the actuator.

Each valve is connected to the corresponding push rod such that when the push rod is in the retracted position the valve is held closed. In this way the push rod is used to hold the closure member in the default closed position to contain and seal the ingredients from the cooking chamber. Pressure within the cooking chamber also acts on the closure member to hold it in the closed position.

Each push rod may comprise an actuating magnetic element, and the actuator may further comprise a plurality of electromagnets corresponding to and arranged proximate the plurality of push rods. Selective actuation of each of the electromagnets generates a driving magnetic force between the electromagnet and the corresponding actuating magnetic element which causes the corresponding push rod to move to the extended position. As such, a contactless driving force is generated between the electromagnet and the push rod, which advantageously reduces moving parts. In addition, the cooking apparatus may include more than one cooking chamber, and the contactless drive enables the electromagnetic drive means to be easily transferred between cooking chambers without for example requiring the disengagement of gears, either by movement of the cooking chambers or the electromagnetic drive means, and requires only a single electromagnetic drive arrangement to be provided.

Each push rod may comprise a locating magnetic element positioned along its length and arranged to co-operate with a ferromagnetic portion located on the storage container to hold and locate the push rod in the retracted position. The strength of the locating magnetic element being selected such that the holding force between the locating magnetic element and the ferromagnetic portion is less than the driving force between the actuating magnetic element and the electromagnet. As such, the driving force overcomes the holding force to move the push rod to the extended position. The locating magnet is sufficiently strong to hold a storage container closed when filled with ingredients.

The cooking apparatus may further comprise a controller for selectively controlling the actuator to independently move the closure members to the open position at pre-determined intervals to selectively and sequentially dispense the ingredients. The controller may be programmable with an input program corresponding to a specific cooking program. The program may define release times for each ingredient and/or cooking temperature and/or chamber pressure. The controller may comprise data storage means for storing preset cooking programs. The controller may further comprise a user interface to enable a user to specify the required cooking program.

The cooking apparatus is a culinary cooking apparatus for the cooking of foodstuff. It may further comprise a cooking vessel removabley located within the cooking chamber to in use receive the ingredients dispensed from the ingredient storage containers and contain them during cooking. The cooking vessel is preferably a bowl or similar container. The removable container enables the food to be easily removed from the cooking chamber for serving and allows the cooking apparatus to be more easily cleaned.

The heating means may comprise an induction coil and the cooking vessel may be formed at least in part from a ferromagnetic material. The induction coil is thereby able to induce a current in the cooking vessel to heat the food contained therein. Use of an induction coil prevents excessive heat generation and enables the cooking temperature within the chamber to be more rapidly and easily regulated.

The cooking chamber may comprise an automated pressure valve controlled by the controller to moderate the pressure within the cooking chamber. The pressure valve is actuated by the controller to selectively release pressure from within the chamber, and may also be configured as an emergency pressure release.

The heating element may also be controlled by the controller to moderate the heat applied to the ingredients within the cooking chamber. As such, the cooking device is able to control the time at which an ingredient is added to the dish and the temperature at the time of addition.

The controller may be programmed by a smart card, or a portable electronic data delivery device or via a wireless data delivery system.

The storage container may be positioned within the cooking chamber. As such, the cooking chamber is formed from a first enclosure, with the storage container defining separate discrete enclosures within the cooking chamber.

The cooking apparatus may be provided with a refrigeration system to enable it to be filled with fresh ingredients ahead of a convenient cooking time. An example of a refrigeration generator being a Peltier module which may be attached to the cooking apparatus by a suitable mounting. The storage container may be formed from aluminium or other suitable thermally conductive material capable of transferring heat from ingredients for the refrigeration unit. A condenser and an evaporator may also be provided and attached to the Peltier module. When the ingredient storage is filled and in place, electrical power is applied to the Peltier Module, heat is pumped from the condenser to the evaporator where the waste heat is lost to the atmosphere.

The temperature of the cooking chamber, the amount of pressure, the timing of the introduction of the ingredients and the mixing may be managed by a removable programmable smart card. The smart card may also have printed information concerning the ingredients of the recipe. Alternatively a radio receiver and RAM memory may be used to relay cooking programs from a convenient internet site to a RAM chip controller which may be provided within the control unit of the cooker. Alternatively a separate remotely placed smart card holder may be provided which may be connectable to a USB port on a computer, the card having a flash memory programmable prior to insertion into a card receiver should a new recipe be required.

The cooking apparatus may be provided with an automatic venting device which is engaged by the controller after the cooking process has finished.

The controller may be provided with manual input controls to enable the operator to preset user defined cooking instructions. The cooking apparatus may further include sensors to provide information to the controller relating to temperature and pressure within the cooking chamber. The controller may include means for obtaining and processing information and to enable automatic shut down in the case of jamming of any of the devices or functions, overheating or any other malfunction.

The removable cooking vessel preferably has a concaved base to encourage the ingredients to flow towards the centre of the cooking vessel. The vessel may be provided with a stirring blade having a blade shape which conforms to the internal cross sectional profile of the vessel in order to scrape and mix in the ingredients therein.

The present invention will now be described by way of example only with reference to the following illustrative figures in which:
Figure 1 shows a cooking apparatus according to an embodiment of the invention with an ingredient container shown in section view for illustrative purpose;
Figure 2 is a cross sectional view of a cooking apparatus according to another embodiment of the invention;
Figure 3 shows a cross sectional view of an ingredient container of the cooking apparatus of Figure 2 in the inverted filling position with the closure member open;
Figure 4 shows the ingredient container of Figure 4 with the closure member closed;
Figure 5 shows the cooking apparatus of Figure 2 with a cooking vessel and stirring device included;
Figure 6 shows a cooking apparatus according to another embodiment of the invention including multiple cooking chambers movable on a carousel arrangement;
Figure 7 is a cross sectional view of a cooking apparatus according to yet another embodiment of the invention;
Figure 8 is a cross sectional view of a cooking apparatus according to a further embodiment of the invention;
Figure 9 shows the mixing blade of the cooking apparatus of Figure 8;
Figure 10 is a cross sectional view of a cooking apparatus according to another embodiment of the invention;
Figure 11 shows a cross sectional view of the ingredient containers of the cooking apparatus of Figure 10 in the inverted filling position;
Figure 12 shows the ingredient containers of Figure 11 in conventional "in use" position;
Figure 13 shows a cross sectional view of the latch of the cooking apparatus of Figure 10 in the closed position;
Figure 14 shows a cross sectional view of the latch of the cooking apparatus of Figure 10 in the open position;
Figure 15 shows a cross sectional view of the lower portion of the cooking apparatus of Figure 10;
Figure 16 is view from beneath of the ingredient containers of the cooking apparatus of Figure 10 with one of the ingredient containers in the closed position; and
Figure 17 is a cross sectional view of a cooking apparatus according to yet another embodiment of the invention.

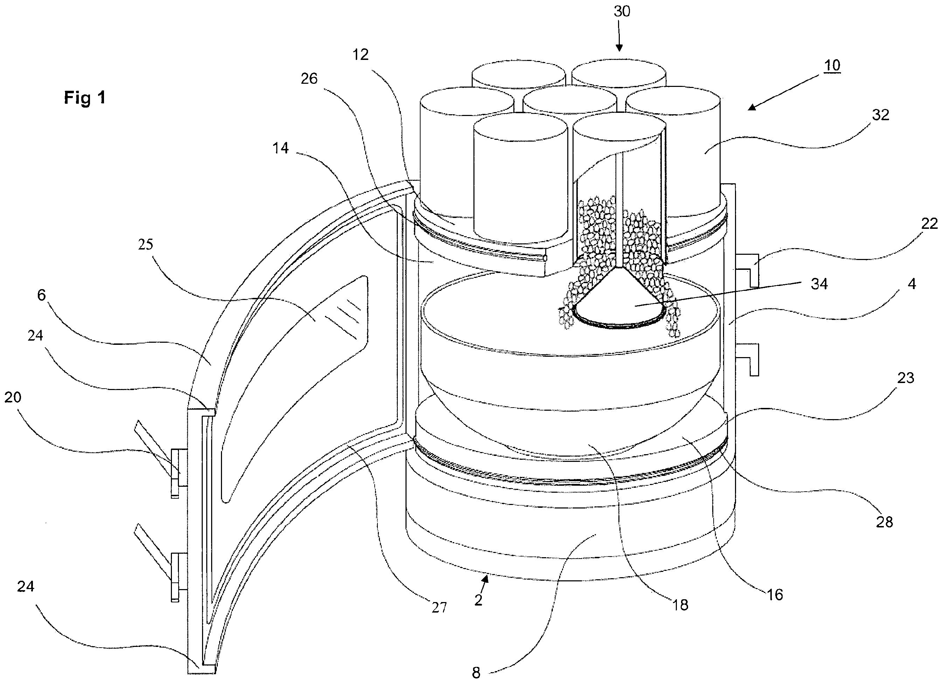

Referring to Figure 1, a cooking device 10 comprises a housing 2 comprising a cylindrical side wall 4, a base section 8 and roof 12. The wall 4, base section 8 and roof 12 define an inner cavity defining the cooking chamber 14. The side wall 4 includes a door 6 for providing access to the cooking chamber 14. The door 6 comprises a viewing window 25 hinged along a first vertical edge and is semi-cylindrical in shape. The opening created by the door 6 when moved to the open position is substantially equal to the diameter of the cylindrical wall section 4 to maximise access to the cooking chamber 14 and enable a cooking vessel 18 to be placed in the cooking chamber 14 having a diameter substantially equal to the cooking chamber 14.

A base plate 16 defines the floor of the cooking chamber 14 and supports the cooking vessel 18, which may be a bowl or any other suitable vessel for containing food during cooking. The base plate 16 includes an induction coil (not shown), connected to a power supply and control means for providing the induction coil with an oscillating current. The induction coil is used to provide means for cooking food within the cooking chamber 14, by inducing a current in the cooking vessel 18, which is formed of an electrically conducting material, to generate heat. Alternatively, the base plate 16 may comprise a resistive electrical heating element for heating food through the conduction of heat to the cooking vessel 18 and through heating of the surrounding air.

The door 6 comprises latches 20 which engage with corresponding keeps 22 on the side wall 4 to provide a locking mechanism to lock the door 6 in the closed position. The roof 12 includes a seal 26 and the base plate 16 includes a seal 28 extending from their outer edges. The door 6 comprises inwardly extending flanges 24 located at its upper and lower edges which are configured to receive and seal against the seals 26 and 28. Specifically the flanges 24 define seal channels for receiving and engaging with the upper seal 26 and lower seal 28. A further seal 27 is provided on the door 6 which seals against the side edge 23 of the base plate 16 and the vertical edges of the side wall 4 proximate the opening 14. In this way, when the door 6 is locked in the closed position the cooking chamber 14 is sealed from the atmosphere.

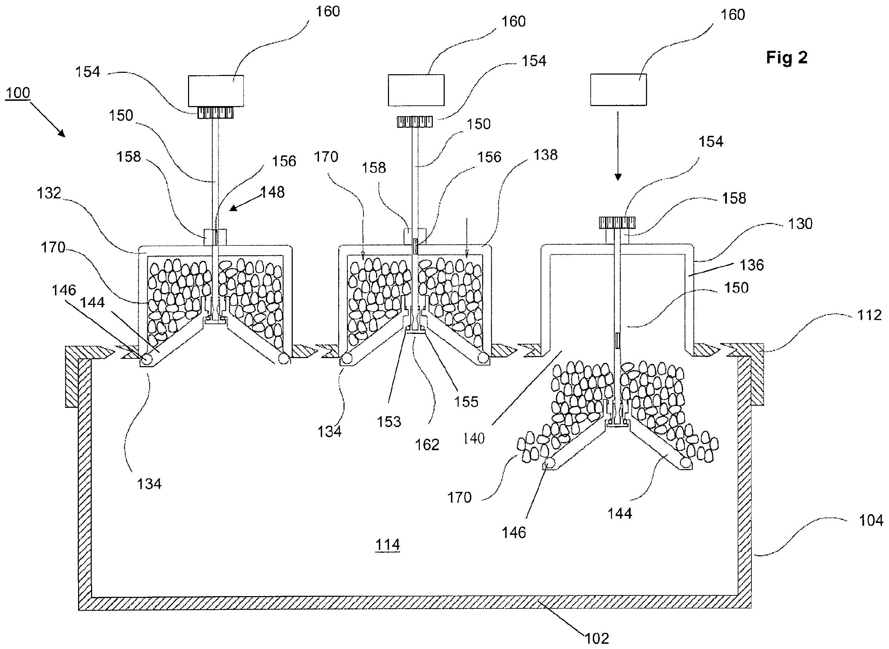

An ingredient storage section 30 is connected to the roof 12. The ingredient storage section 30 comprises a plurality of ingredient storage containers 32. The ingredient storage containers 32 are connected to and extend through the roof section 12 and are open at their base. Closure members 34 are provided to seal the ingredient containers 32 from the cooking chamber 14 and hold food away from the cooking chamber 14. The closure members 34 are movable to an open position in which the ingredient containers 32 are openly connected with the cooking chamber 14 to enable food within the food chambers 32 to fall into the cooking vessel 18. The actuating means for moving the closure member 34 between the open and closed positions is the same as that utilised in connection with the embodiments shown in Figures 2 to 6, and is described in detail below.

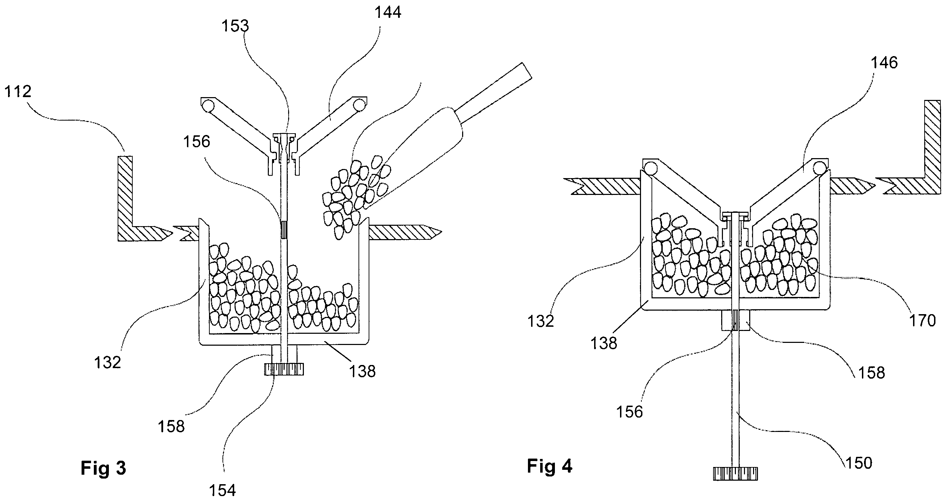

In an alternative arrangement shown in Figure 2, a cooking device 100 includes cooking chamber 114 defined by a cylindrical enclosure including a body section 104, a base 102, and a removable lid section 112. An ingredient storage section 130 is connected to the lid 112. The ingredient storage section 130 includes a plurality of ingredient storage containers 132. Each container 132 comprises a cylindrical side wall section 136 closed at one end by an end wall 138 which seals the container end in the first orientation shown in Figure 2 and defines a base for the container 132 in a second inverted orientation as shown in Figure 4.

Each ingredient container 132 is connected to and extends through the lid 112 such that when the lid 112 is located on the body section 104, the open end 140 of the container 132 is contiguous with the cooking chamber 114. The ingredient containers 132 and lid 112 are sealed in an air tight manner and the lid 112 is provided with a seal (not shown) to seal against the body section 104, such that when the lid 112 is secured to the body section 104, the cooking chamber 114 and the ingredient containers 132 form a pressure vessel. As such, the cooking device 100 is able to operate as a pressure cooker with the sealed lid 112 retaining heated gas within the cooking chamber 114, such that a pressure rise is achieved when the temperature in the cooking chamber 114 is increased. A pressure release valve (not shown) is provided to regulate the pressure within the cooking chamber 114 and to provide a safety release if the pressure exceeds a predetermined maximum value.

A valve 134 is associated with each ingredient container 132 to close and seal the ingredient containers 132 from the cooking chamber 114. Each valve 134 comprises a conical closure member 144, a seal 146 and an actuator 148. The closure member 144 is movable between an open position in which the ingredient container 132 is in open connection with the cooking chamber 114, and a closed position in which the ingredient container is closed and sealed from the cooking chamber 114. The seal 146 extends around the outer edge of the closure member 144. The lower edge of the side wall 136 ingredient storage of each container 132 proximate the opening 140 is tapered to define a valve seat 134 which engages with the seal 146 when the closure member 144 is in the closed position to seal the ingredient storage container 132. As such when the closure member 144 is in the closed position, ingredients including liquids may be retained in the ingredient storage container 132 in suspended isolation from the cooking chamber 114.

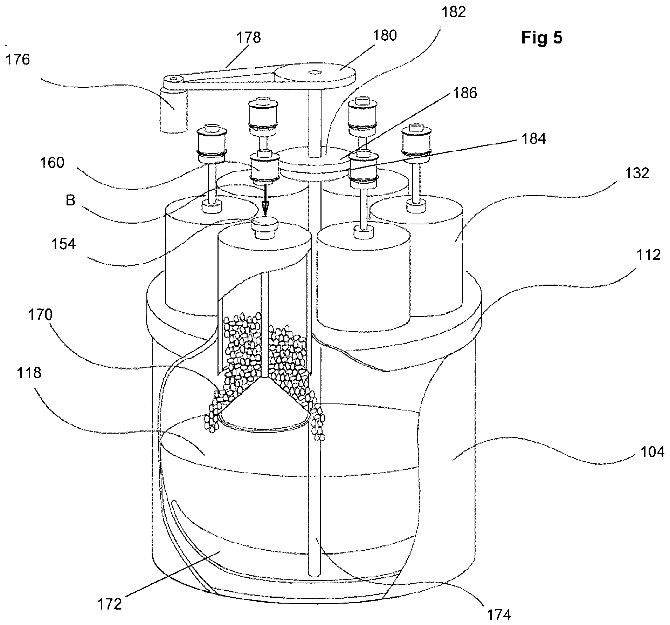

As shown in Figure 5, a cooking vessel 118 is provided within the cooking chamber 114 and is of a suitable size such that ingredients 170 deposited into the cooking chamber 114 from the containers 132 fall into the cooking vessel 118. A cooking element such as an induction coil may be placed in the base of the housing 104, or alternatively the housing 104 may be located on top of a separate cooking element.

An actuator 148 is provided to move the closure members 144 between the closed and open positions. The actuator 148 comprises a plurality of actuating rods 150 corresponding to the plurality of storage containers 132. Each push rod 150 is connected at one end to a valve 162 located in the closure member 144, and at the opposing end to an actuating magnet 154. A locating magnet 156 is also housed within the actuating rod 150 at a position along its length such that when the actuating rod 150 is in the closed position the locating magnet 156 is positioned within a steel locating collar 158 mounted to the upper surface of the ingredient storage container 132. The actuating magnets 154 and locating magnets 156 are preferably rare earth magnets.

The actuating rod 150 is connected to a valve member 153 of the valve 162 which closes a valve aperture formed in the closure member 144. The valve member 153 includes a seal 155 mounted to its upper surface proximate its periphery. The closure member 144 includes a flange section 162 extending about the valve aperture which defines a valve seat against which the valve member 153 seats and seals.

The push rod 150 is held in the closed position by the locating magnet 156 through the magnetic attraction between the locating magnet 156 and the steel collar 158, which is sufficient to hold the closure member 144 in the closed position against the weight of ingredients 170 contained within the ingredient container 132. In addition, in use, the pressure within the cooking chamber 114 caused by the heating of food within the cooking chamber 114 acts against the outer surface of the closure member 144 to further hold the closure member 144 in the closed position.

The actuating magnet 154 is held proximate a solenoid 160 in the closed position. Activating the solenoid 160 generates an opposing magnetic field which repels the actuating magnet 154, causing the actuating rod 150 to move downwards and moving the locating magnet 156 away from the steel collar 158. As the actuating rod 150 moves downwards it moves the valve member 153 to an open position creating a gap between the valve member 153 and the flange section 162. In use, this gap enables air from within the cooking chamber 114 to move under pressure into the storage space 170. The increase of pressure within the storage space 170 and the removal of the support provided by the valve member 153, causes the closure member 144 to move downwards to the open position. As the closure member 144 moves to the open position the ingredient storage container 132 is opened and the ingredients 170 contained therein are able to fall into the cooking chamber 114. The conical shape of the closure member 144 assists delivery of the ingredients by providing a sloping delivery surface, which also prevents the ingredients 170 becoming trapped on the closure member 144 during delivery.

The actuator 148 is activated by a controller (not shown). The controller is connected to the solenoids 160 and coordinates the timed activation of the actuator 148 to release the ingredients 170 from each ingredient container 132 at specific predetermined stages during the cooking process. The controller may be programmed with a pre-determined cooking program, and may deliver an actuation signal to each of the solenoids 160 at specific pre-determined times during the cooking program to deliver specific ingredients to the cooking chamber at specific pre-determined intervals. The controller may activate the solenoids 160 to open the storage containers 132 in any order and at any time, and may release more than one container 132 simultaneously, or may release the ingredients within one container 132 gradually over several release cycles.

To prepare the cooking device 100 for cooking a recipe, the lid 112 is removed from the housing 104 and inverted. The actuators 148 are moved to the open position, with the actuating magnet 154 engaging with the steel locating collar 158 to hold the closure member 144 in the fully open position thereby providing access to the storage container 132. In the inverted position, the ingredient containers 132 define cups for receiving ingredients 170. For a specific recipe, specific types and amounts of ingredients will be required. The separate ingredients are placed into separate ingredients containers 132, or mixed with other ingredients which are required to be added at the same time during a cooking program. Once the required ingredients have been added, which may fill some or all of the ingredient containers 132, the actuating rods 150 are pulled downwards to a closed position and the locating magnet 156 hold the closure member 144 in the closed position, sealing each ingredient container 132. The lid 112 is then returned to its original orientation, with the closure members 144 being retained in the closed position by the locating magnets 156. A cooking vessel 118 is placed into the housing 104 and the lid is then secured to the housing 104 to seal the cooking chamber 114.

The operator then programs the controller to set the required release times for each of the ingredient containers 132 in accordance with the required stages of introduction appropriate for the recipe. The user may manually input a series of specific release times relating to each ingredient container 132, together with an overall cooking time for the recipe. Alternatively, the controller may be pre-programmed with cooking programs relating to specific recipes with the user then only being required to select the specific recipe program.

Once the controller has been activated, the cooking program is commenced. In addition to controlling the actuators 148, the controller is also linked to the heating element to control duration and temperature of heating. During the cooking program solenoids 160 associated with the specific ingredient containers 132 are activated at programmed times to release ingredients 170 into the cooking vessel 118. The controller may also be linked to the pressure release valve in order to control the pressure within the cooking chamber 114.

During the cooking program, the controller determines when a specific ingredient is required to be added. The controller then activates the solenoid 160 associated with the ingredient container 132 containing that ingredient, to initiate downward movement of the actuating rod 150 and open the valve 162. This causes pressurized air within the cooking chamber 114 to be forced into the ingredient container 132, which urges against the upper surface of the closure member 144 forcing the closure member 144 downwards to the open position thereby releasing the ingredients 170 from within the ingredient container 132 into the cooking vessel 118. This process is repeated at various stages during the cooking cycle for each ingredient provided.

As shown in Figure 5, a stirring blade 172 is provided for mixing the ingredients contained within the cooking vessel 118 during the cooking cycle. A drive shaft 174 is connected to the stirring blade 172. The stirring blade 172 is positioned proximate the base of the cooking vessel 118. The drive shaft 174 extends through a sealed aperture in the lid 112 to a drive mechanism 176. The drive mechanism includes an electric motor 176 which drives a drive wheel 180 via a drive belt 178. The drive wheel 180 is connected to the drive shaft 174 by a magnetic clutch 182 comprising a magnetic disc 184 connected to the upper end of the drive shaft 174 and a solenoid 186 connected to the drive wheel 180. Activation of the solenoid 186 links the drive wheel section 180 and the drive shaft 174 to enable drive to be transmitted via the drive shaft 174 to the stirring blade 172. When the solenoid 186 is deactivated the drive shaft 174 is separated from the solenoid 186 to cease drive and enable the stirring blade 172 to be removed from the cooking vessel 118 when the lid 112 has been removed from the housing 104.

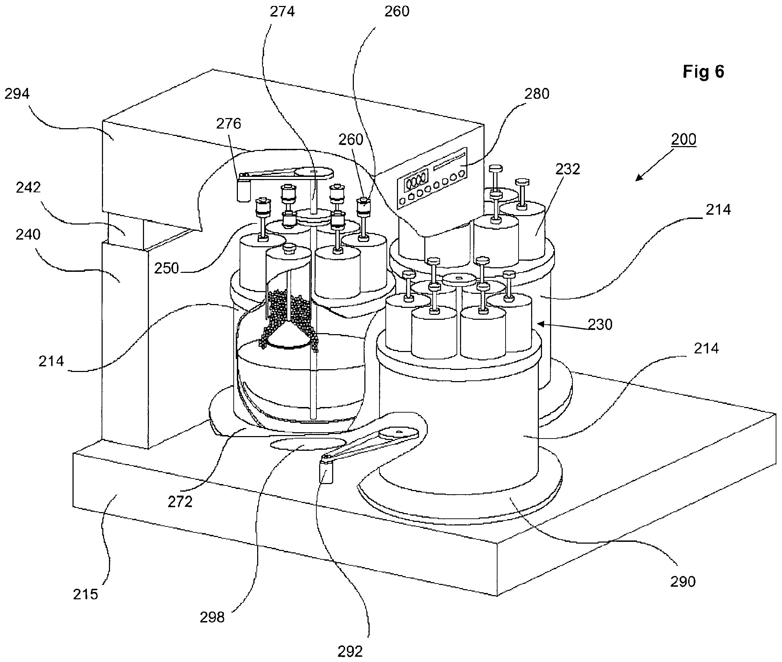

In a further arrangement shown in Figure 6, the cooking device 200 may comprise multiple cooking chambers 214 each having a separate ingredient storage and delivery sections 230. The cooking chambers 214 are mounted on a carousel 290 supported on a base 215 and driven by an indexing drive 292. A control housing 294 is positioned above the cooking chambers 214 on a vertical support 240 having a height adjustable section 242. The control housing 294 contains actuating solenoids 260 corresponding to the actuating rods 250 of the ingredient storage sections 230, and also includes a drive mechanism 276 for driving the drive shafts 274 of the stirring blades 272. An induction heating element 298 is provided in the base section 215 and located beneath the top housing section 294.

The cooking vessel 214 located beneath the upper housing 294 by the carousel 290 connects to the actuating solenoids 260 and the drive mechanism 276 and is located over an induction heating element 298. In this position, the controller 280 controls heating, ingredient introduction and mixing for the cooking vessel 214. When the cooking program for the first cooking vessel 214 has been completed the carousel 290 is rotated to locate the following cooking vessel 214 beneath the upper housing 294 which similarly engages with the actuating solenoids 260, the drive mechanism 276 and the induction heating element 298 in order for the cooking program for that cooking chamber 214 to be completed. In this way, several meals or multiple quantities of the same meal may be cooked by a single cooking device 200, which is particularly advantageous in a professional kitchen environment.

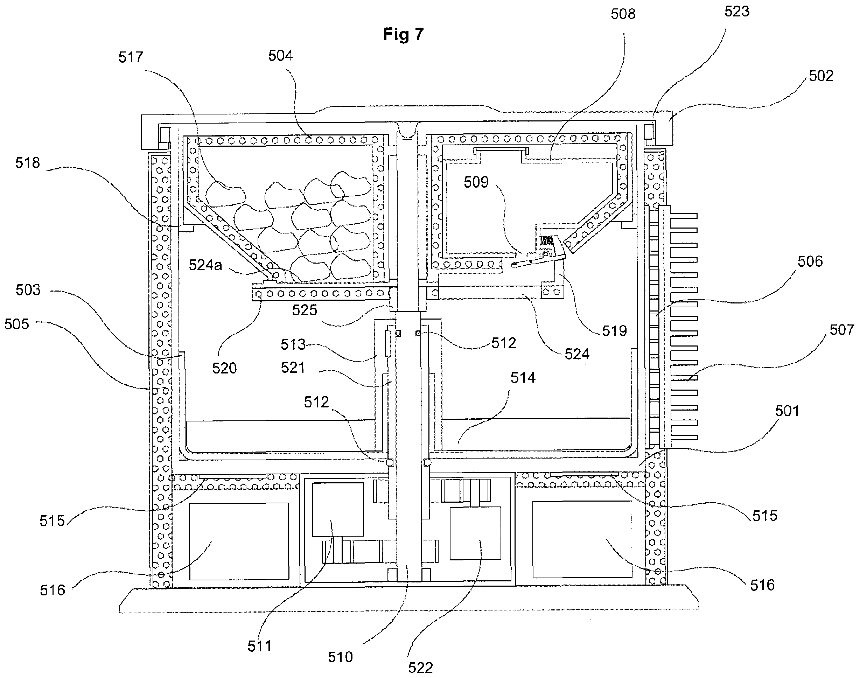

In an alternative embodiment shown in Figure 7, a vessel 501 provides the main container and chassis. The sealable lid 502 is engaged and clamped utilising a deformable seal 523. The vessel 501 may be provided with a removable container 503. A compartmented carousel 504 is provided with various sizes of compartments to accommodate various amounts of ingredients 517. The carousel 504 may be provided with a water container 508. The water or stock container 508 may be removed for cleaning purposes. The valve 509 provides one method of releasing fluids into the cooking area. A cam 519 is attached to a rotating shutter plate 520. The rotating shutter plate 520 is provided with a keyed locater 525. The cam 519 applies a lift moment to the valve 509, with the rotational speed of the rotating shutter plate 520 governing the volume of liquid dispensed at any one time. Drive shaft 510 provides motive force to rotate plate 520. The rotating shutter plate 520 is also provided with a slot 524. On the occasion that the slot is aligned with the base of one of the carrousels' compartments the contents are released into the cooking vessel. The drive shaft 510 is provided seals 512 which engage with the mixer drive 521. A mixing paddle 514 is fixed to detachable mounting 513 which is driven by shaft 521. Drive shafts 521 and 510 are driven by electric motors 522 and 511 respectively. Motors 522 and 511 are switched by controller 516 which also provides programming for a heater 515 and a refrigerating Peltier module 506. A programmable smart card (not shown) is placed into a card reader (not shown). Information gathered is then relayed to controller 516. The carrousel 504 includes a number of fixed containers, which may be substituted with conveniently attached partitions to provide an unrestricted amount of compartments or removable storage sizes for smaller and larger volumes of ingredients.

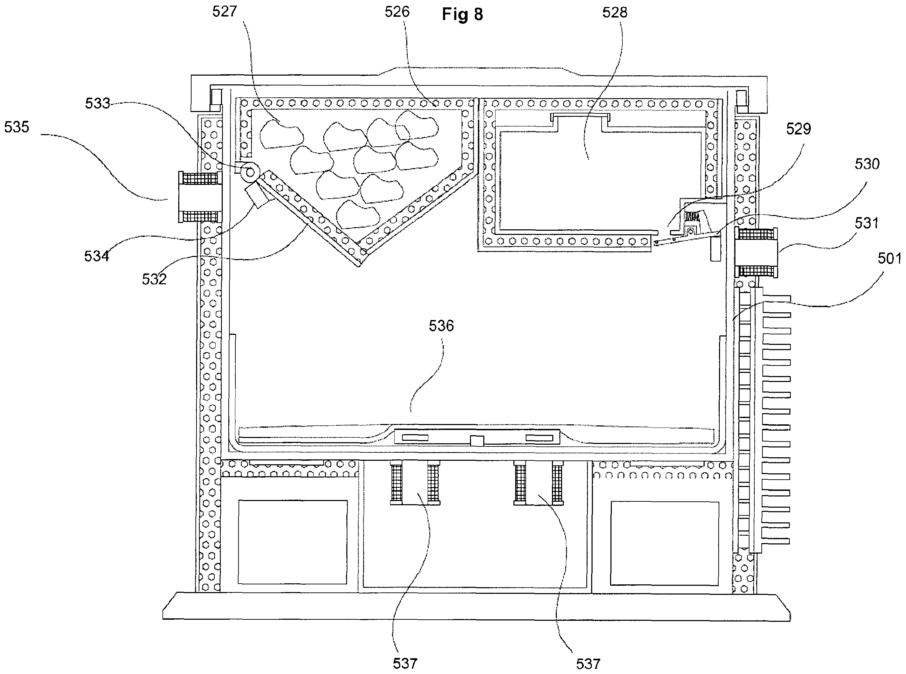

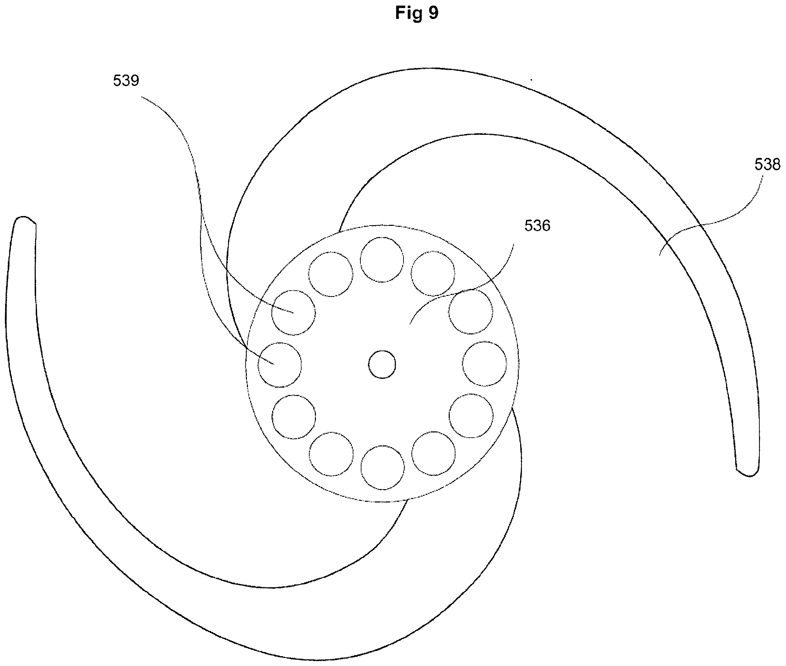

In a further arrangement, as shown in Figure 8, there is provided an alternative drive mechanism which eliminates the use of drives shafts. The carrousel 526 is provided with a shutter mechanism gate 532, hinged at point 533. A completely encased rare earth magnet (REM) 534 is attached in a convenient position relative to electromagnet 535 which is positioned outside of the non ferrous vessel 501. To operate, current is directed to electromagnet 535 which attracts REM 534 causing the gate 532 to be opened releasing contents 527. Each compartment is provided with a set of gate operating components. A liquid container 528 is provided with valve arrangement 530 to which a REM is attached, and which is conveniently aligned with electromagnet 531 liquid exits via hole 529 in the container. Stirring device 536 is provided with circular arrangement of REM's 539, as shown in Figure 9. Electromagnets 537 are placed outside and beneath the non ferrous vessel, the activation of which cause rotation of the stirrer 536. The electromagnet arrangement emulates a stepper type motor. Paddles 538 providing the stirring action.

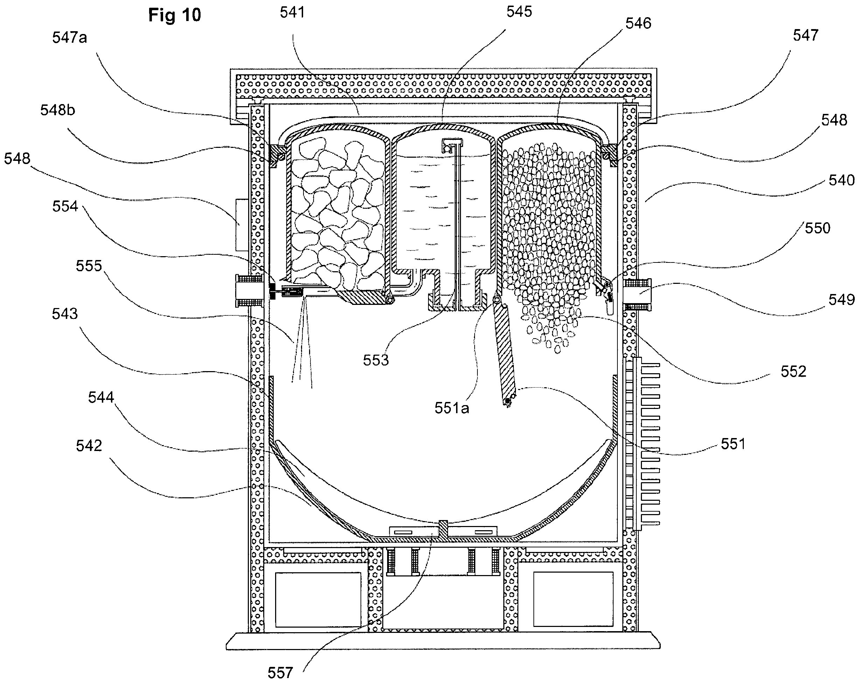

Figure 10 shows a further embodiment in which pressure vessel 540 is provided with the multiple cylinder dispensing unit 541 which is provided with attachment lugs 547 and 547a also a third lug (not shown). The vessel 540 is provided with resting and alignment points 548 and 548b and a third point (not shown). The dispensing unit 541 is positioned such that the coil 549 aligns with magnetic catches 550 of the ingredient storage cylinders 546. Attachment lugs 547 and 547a and their corresponding resting and alignment points 548 and 548a are purposely arranged around the perimeter in an offset pattern which provides an alignment key easily identified to the cook, by aligning markings on the pressure vessel 540 which mate with similar on the dispensing unit 541. The dispensing unit 541 is readily aligned ready for use. Ingredients are dispensed by the energising of the coil 549 which acts on the embedded REM in catch 550. Trap door 551 opens and the contents 552 are released into the removable cooking vessel 543. During cooking the ingredient containment cylinders 546 are sealed and remain at atmospheric pressure. When catch 550 is activated the resident pressure within the vessel 540 is released into the selected cylinder 546. The surge of pressure into the cylinder 546 assists the opening of the trap 551 enabling the contents of the cylinder 546 to be deposited into cooking vessel 543.

The stored ingredients in the cylinders (example cylinder) 546 remain uncooked prior to being displaced into the cooking vessel 543 which is accomplished by sealing the trap doors 551 of the cylinders 546 until required. To further prevent affecting the contents of the storage cylinders 546, insulation may be incorporated in the construction or moulding of the trap door/valve closure member 551. Water may be added from the reservoir 545 which is open to the similar pressure to the main pressure vessel 540 via balance tube and entry 553. As water reservoir 545 is pressurised by the steam generated in the pressure vessel 540 the water temperature in the reservoir 545 generally mirrors the temperature of the recipe being cooked in the cooking vessel 543. This is desirable as introducing cold water to ingredients cooking in the vessel may be detrimental to the outcome of the recipe. Delivery of the water is via electromagnetic valve 554 facilitating the flow of water 555. Curved sided cooking vessel 542 is provided with a stirring/mixing paddle 544 to stop the cooking ingredients from sticking to the inner surface of the curved sided cooking vessel 542 as well for providing the required amount of mixing during the cooking process.

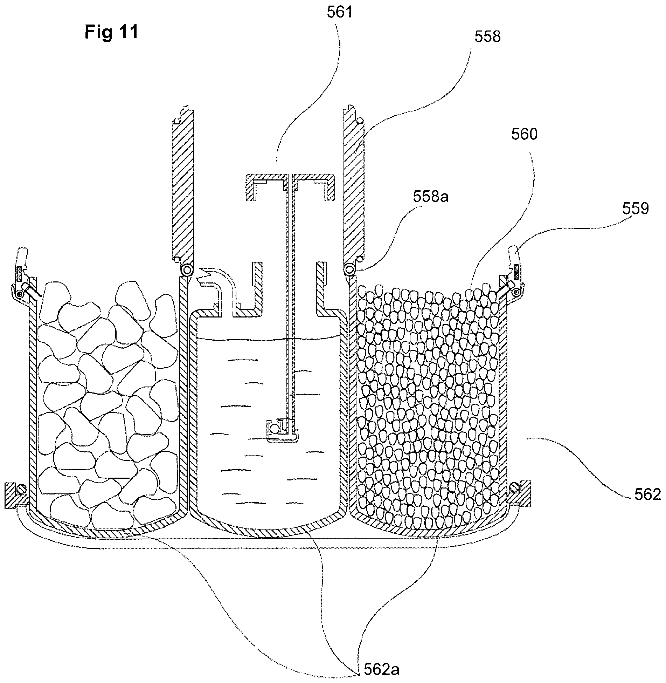

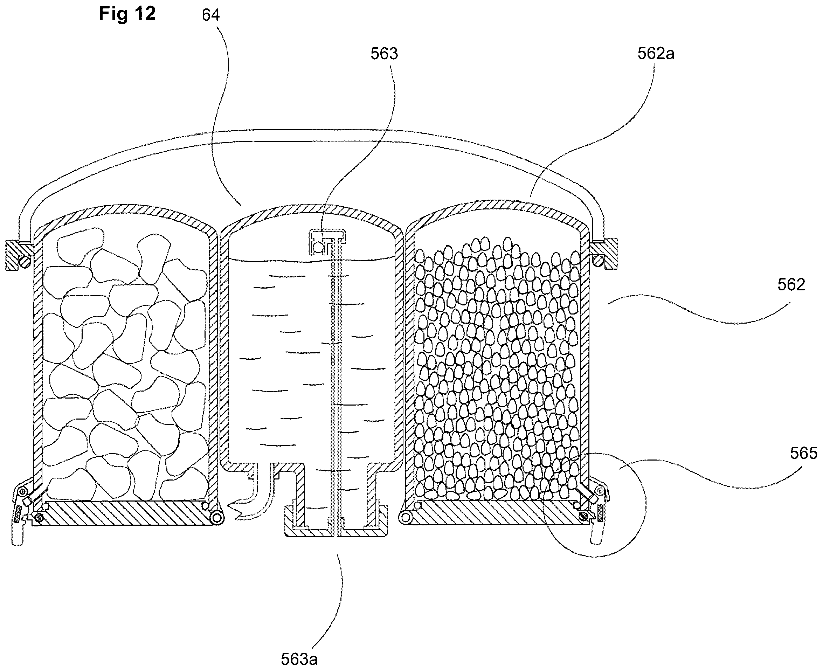

As shown in Figure 11, the storage cylinders 562 are laid on their closed ends 562a to give access to enable filling by releasing catch 559 (if not already released) to open trap 558, adding ingredients 560, and then closing trap 558. In the case of the water reservoir cap 561 is unscrewed for filling, and then replaced. Figure 12 shows the dispensing unit 562 repositioned ready to load into the pressure vessel (not shown), water reservoir 564 is provided float valve 563 to prevent leakage during the inversion process.

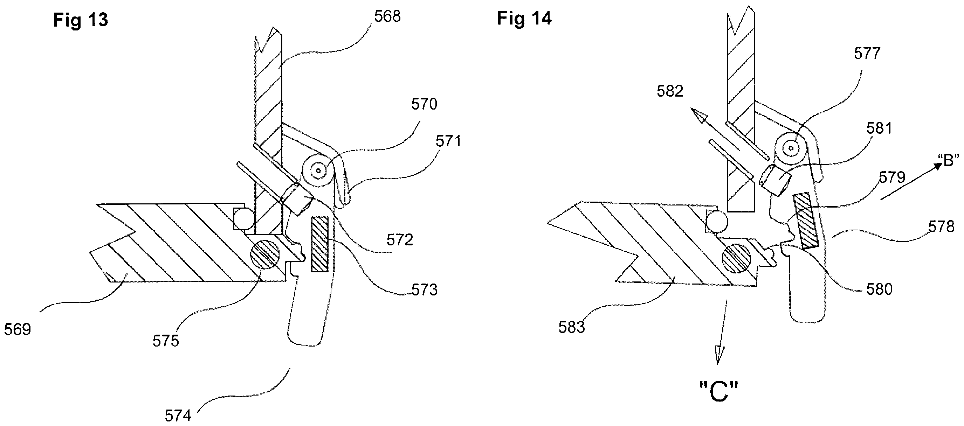

The trap latch 565 is shown in more detail in Figures 13 and 14 where 569 is a section of the trap door and 568 is a section of the storage cylinder to which the latch 574 is attached to via pivot point 570. Sprung cover 571 consolidates the engagement of the latch 574 the trap door 569 assisted by the interaction REMs 573 and 575, valve 572 prevents the ingress of pressure into the storage cylinder area 576, when latch 574 is engaged. As in Figure 13, in Figure 14 catch arm 578 is drawn in direction arrow "B" to release trap door 583 in direction of arrow "C". Simultaneously cam arrangement 580 and pusher 579 assist in releasing the trap door 583. When the dispensing unit (not shown in Fig 14) is installed in the pressure vessel pressure intake valve 581 is also opened when catch arm 578 is drawn in direction "B" facilitating the residing pressure to enter the storage cylinder, assisting the opening and balancing the pressure with the pressure vessel. The catch arm 578 may be activated by hand for filling the cylinders or for giving access for cleaning.

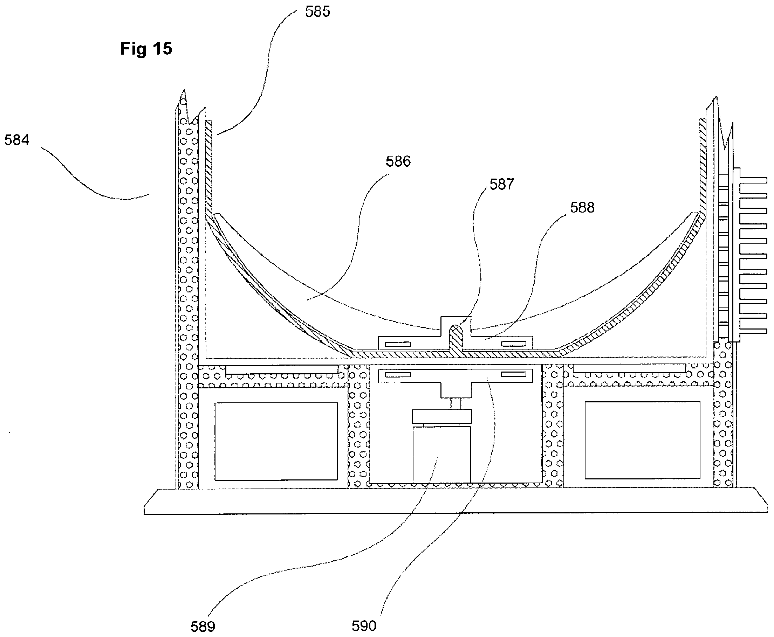

Figure 15 shows an alternative mixer drive where the vessel 584 is equipped with a cooking vessel 585 which is provided with centralised mounting boss 587 onto which mixer blade 586 is attached to drive impellor 588 which has an arrangement of magnets to be attracted to magnetic drive 590 which is powered by electric motor and gearbox combination 589.

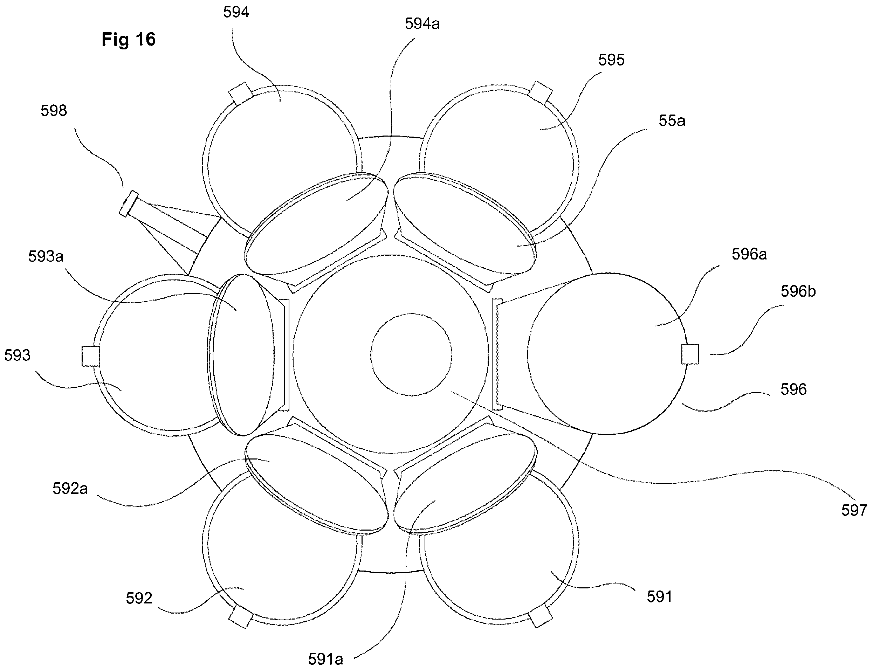

In Figure 16, storage cylinders numbers 591 to 595 inclusive are open with corresponding trap doors open 591a to 595a inclusive, storage cylinder 596 is illustrated with trapdoor 586a closed and catch 596b engaged. Water cylinder 597 is shown central to the arrangement. Water delivery valve 598 is also shown. In an alternative arrangement one or more of the other cylinders 591 to 595 may be provided with a provision to deliver liquids.

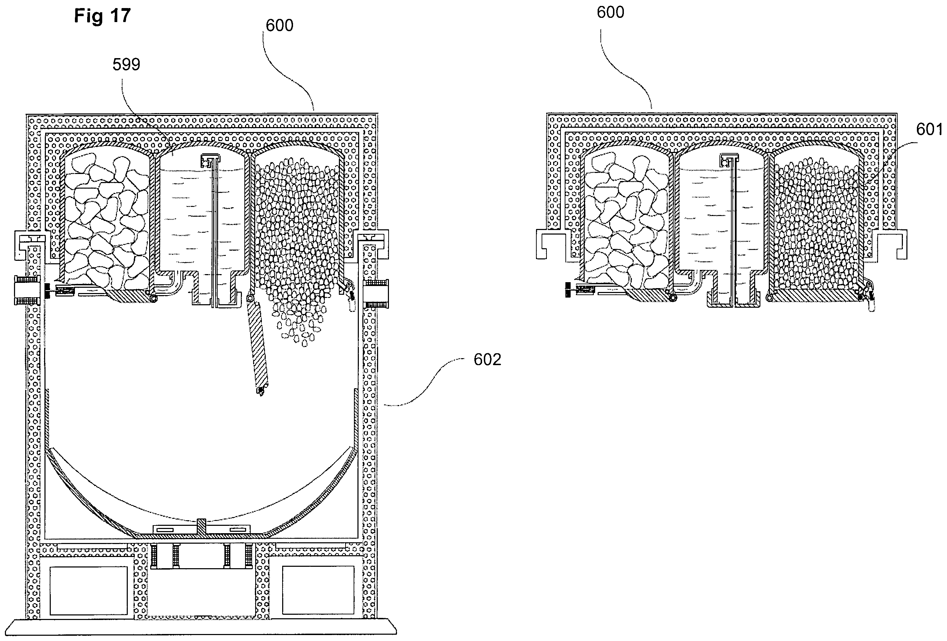

Figure 17 shows a further embodiment of the dispensing unit 599 in which the dispensing unit 599 is built into lid 600. The combined dispensing unit 599 and lid 600 is completely removable and may be filled with ingredients 601 and stored in a refrigerator (not shown), prior to being attached to the main pressure vessel 602.

It will be appreciated that in further embodiments various modifications to the specific arrangements described above and shown in the drawings may be made. For example, the cylindrical cooking chambers may be cooking chambers of any suitable size or shape. In addition, while the ingredients containers are shows as being top-mounted, they may alternatively be mounted to the side wall of the cooking chamber at an incline sufficient for ingredients contained therein to fall into the cooking chamber when the containers are opened or in any other suitable manner which enables the ingredients to fall from the containers into the cooking chamber. Furthermore, while an inductive heater is preferred, any suitable heating means may be provided for effecting a temperature rise in the cooking chamber, and the cooking device may for example be placed on a conventional cooker for heating, with heat being transferred through the base to the cooking chamber.

## Claims

1. A cooking apparatus (10; 100; 200) comprising:
a plurality of walls defining a cooking chamber (14; 114; 214);
heating means (298) for heating ingredients contained within the cooking chamber; and
a plurality of ingredient storage containers (32; 132; 232; 532; 546; 562; 591-5) connected to the cooking chamber and arranged in use selectively to dispense ingredients held therein into the cooking chamber,
wherein each ingredient storage container comprise a separate corresponding closure member (34; 134; 144; 520; 532; 551; 558; 591a-596a) selectively movable between an open position in which the ingredient storage container is open to the cooking chamber and a closed position in which the ingredient storage container is sealed from the cooking chamber;
wherein the cooking chamber is a sealed chamber in sealed connection with the ingredient storage containers such that the cooking chamber and the storage containers define a pressure vessel;
the apparatus further comprising an actuator (148) for moving the plurality of closure members between the open and closed positions;
wherein the actuator comprises a plurality of push rods (150) each connected to a corresponding one of the plurality of closure members, the push rods being movable between a retracted position in which the corresponding closure member is held in the closed position and an extended position in which the corresponding closure member is caused to move to the open position;
wherein each closure member includes a valve (162; 572,581), and wherein movement of the corresponding push rod to the extended position causes the valve to open creating a fluid pathway between the cooking chamber and the storage container for the ingress of gas into the storage chamber.

2. The cooking apparatus of claim 1 wherein the cooking chamber has an opening for access thereto which is selectively closable by a sealed cooking chamber closure member.

3. The cooking apparatus of claim 2 wherein the plurality of walls include a removable lid which defines the sealed cooking chamber closure member.

4. The cooking apparatus of claim 3 wherein the storage containers are connected to and extend through the lid such that when the lid is closed the opening of each storage container is contiguous and in open connection with the cooking chamber when the corresponding storage container closure member is in the open position.

5. The cooking apparatus of any of the preceding claims wherein each valve is connected to the corresponding push rod such that when the push rod is in the retracted position the valve is held closed.

6. The cooking apparatus of any of the preceding claims wherein each push rod comprises an actuating magnetic element, the actuator further comprising a plurality of electromagnets corresponding to and arranged proximate the plurality of push rods, and wherein selective actuation of each of the electromagnets generates a driving magnetic force between the electromagnet and the corresponding actuating magnetic element which causes the corresponding push rod to move to the extended position.

7. The cooking apparatus of claim 6 wherein each push rod comprises a locating magnetic element positioned along its length and arranged to co-operate with a ferromagnetic portion located on the storage container to hold and locate the push rod in the retracted position, the strength of the locating magnetic element being selected such that the holding force between the locating magnetic element and the ferromagnetic portion is less than the driving force between the actuating magnetic element and the electromagnet such that the driving force overcomes the holding force to move the push rod to the extended position when the electromagnet is activated.

8. The cooking apparatus of any of the preceding claims further comprising a controller for selectively controlling the actuator to independently move the storage container closure members to the open position at pre-determined intervals to selectively and sequentially dispense the ingredients.

9. The cooking apparatus of any of the preceding claims further comprising a cooking vessel removably located within the cooking chamber to in use receive the ingredients dispensed from the ingredient storage containers and contain them during cooking.

10. The cooking apparatus of claim 9 wherein the heating means comprises an induction coil and the cooking vessel is formed at least in part from a ferromagnetic material.

11. The cooking apparatus of any one of claims 8 to 10 wherein the cooking chamber has an automated pressure valve controlled by the controller to moderate the pressure within the cooking chamber.

12. The cooking apparatus of any one of claims 8 to 11 wherein the heating element is controlled by the controller to moderate the heat applied to the ingredients within the cooking chamber.

## Patentansprüche

1. Kochvorrichtung (10; 100; 200), umfassend:
mehrere Wände, die eine Garkammer definieren (14; 114; 214);
Heizmittel (298) zum Erwärmen von Zutaten, die innerhalb der Garkammer enthalten sind; und
mehrere Zutatenaufbewahrungsbehälter (32; 132; 232; 532; 546; 562; 591-5), die mit der Garkammer verbunden und derart angeordnet sind, dass sie in Verwendung darin enthaltene Zutaten in die Garkammer selektiv abgeben,
wobei jeder Zutatenaufbewahrungsbehälter ein separates entsprechendes Verschlusselement (34; 134; 144; 520; 532; 551; 558; 591a-596a) umfasst, das zwischen einer offenen Stellung, in welcher der Zutatenaufbewahrungsbehälter zur Garkammer offen ist, und einer geschlossenen Stellung, in welcher der Zutatenaufbewahrungsbehälter gegenüber der Garkammer abgedichtet ist, selektiv beweglich ist;
wobei die Garkammer eine abgedichtete Kammer in abgedichteter Verbindung mit den Zutatenaufbewahrungsbehältern ist, sodass die Garkammer und die Aufbewahrungsbehälter einen Druckbehälter definieren;
die Vorrichtung ferner einen Aktor (148) zum Bewegen der mehreren Verschlusselemente zwischen den offenen und geschlossenen Stellungen umfasst;
wobei der Aktor mehrere Schubstangen (150) umfasst, von denen jede mit einem entsprechenden der mehreren Verschlusselemente verbunden ist, und die Schubstangen zwischen einer eingefahrenen Stellung, in der das entsprechende Verschlusselement in der geschlossenen Stellung gehalten wird, und einer ausgefahrenen Stellung, in der bewirkt wird, dass sich das entsprechende Verschlusselement in die offene Stellung bewegt, beweglich ist;
wobei jedes Verschlusselement ein Ventil umfasst (162; 572; 581), und wobei eine Bewegung der entsprechenden Schubstange in die ausgefahrene Stellung bewirkt, dass sich das Ventil öffnet, was einen Fluidweg zwischen der Garkammer und dem Aufbewahrungsbehälter zum Einströmen von Gas in die Aufbewahrungskammer öffnet.

2. Kochvorrichtung nach Anspruch 1, wobei die Garkammer eine Öffnung zum Zugriff darauf aufweist, die durch ein abgedichtetes Garkammerverschlusselement selektiv verschließbar ist.

3. Kochvorrichtung nach Anspruch 2, wobei die mehreren Wände einen abnehmbaren Deckel umfassen, der das abgedichtete Garkammerverschlusselement definiert.

4. Kochvorrichtung nach Anspruch 3, wobei die Aufbewahrungsbehälter mit dem Deckel verbunden sind und sich durch diesen erstrecken, sodass, wenn der Deckel geschlossen ist, die Öffnung jedes Aufbewahrungsbehälters fortlaufend und in offener Verbindung mit der Garkammer ist, wenn sich das entsprechende Aufbewahrungsbehälterverschlusselement in der offenen Stellung befindet.

5. Kochvorrichtung nach einem der vorstehenden Ansprüche, wobei jedes Ventil mit der entsprechenden Schubstange verbunden ist, sodass das Ventil geschlossen gehalten wird, wenn sich die Schubstange in der eingefahrenen Stellung befindet.

6. Kochvorrichtung nach einem der vorstehenden Ansprüche, wobei jede Schubstange ein Magnetbetätigungselement umfasst und der Aktor ferner mehrere Elektromagneten umfasst, die den mehreren Schubstangen entsprechen und nahe diesen angeordnet sind, und wobei die selektive Betätigung von jedem der Elektromagneten eine Magnetantriebskraft zwischen dem Elektromagneten und dem entsprechenden Magnetbetätigungselement erzeugt, was bewirkt, dass sich die entsprechende Schubstange in die ausgefahrene Stellung bewegt.

7. Kochvorrichtung nach Anspruch 6, wobei jede Schubstange ein Magnetanordnungselement umfasst, das entlang seiner Länge positioniert und ausgeführt ist, mit einem an dem Aufbewahrungsbehälter befindlichen ferromagnetischen Abschnitt zusammenzuwirken, um die Schubstange in der eingefahrenen Stellung zu halten und anzuordnen, wobei die Stärke des Magnetanordnungselements derart ausgewählt ist, dass die Haltekraft zwischen dem Magnetanordnungselement und dem ferromagnetischen Abschnitt kleiner als die Antriebskraft zwischen dem Magnetbetätigungselement und dem Elektromagneten ist, sodass die Antriebskraft die Haftkraft überwindet, um die Schubstange in die ausgefahrene Stellung zu bewegen, wenn der Elektromagnet aktiviert wird.

8. Kochvorrichtung nach einem der vorstehenden Ansprüche, ferner umfassend eine Steuerung zum selektiven Steuern des Aktors, um die Aufbewahrungsbehälterverschlusselemente unabhängig voneinander in vorbestimmten Intervallen in die offene Stellung zu bewegen, um die Zutaten selektiv und sequenziell abzugeben.

9. Kochvorrichtung nach einem der vorstehenden Ansprüche, ferner umfassend ein innerhalb der Garkammer entfernbar angeordnetes Gargefäß, sodass es bei Verwendung die Zutaten aufnimmt, die von den Zutatenaufbewahrungsbehältem abgegeben werden, und sie während des Kochens enthält.

10. Kochvorrichtung nach Anspruch 9, wobei das Heizmittel eine Induktionsspule umfasst und das Kochgefäß mindestens teilweise aus einem ferromagnetischen Material gebildet ist.

11. Kochvorrichtung nach einem der Ansprüche 8 bis 10, wobei die Garkammer ein automatisiertes Druckventil aufweist, das durch die Steuerung gesteuert wird, sodass es den Druck innerhalb der Garkammer moderiert.

12. Kochvorrichtung nach einem der Ansprüche 8 bis 11, wobei das Heizelement durch die Steuerung gesteuert wird, sodass es die auf die Zutaten innerhalb der Garkammer angewandte Wärme moderiert.

## Revendications

1. Appareil de cuisson (10, 100, 200), comprenant :
une pluralité de parois définissant une chambre de cuisson (14, 114, 214) ;
un moyen de chauffage (298) pour chauffer des ingrédients contenus à l'intérieur de la chambre de cuisson ;
et
une pluralité de réservoirs de stockage d'ingrédients (32, 132, 232, 532, 546, 562, 591-5) reliés à la chambre de cuisson et agencés lors de l'utilisation pour distribuer sélectivement des ingrédients contenus dans ceux-ci jusque dans la chambre de cuisson,
chaque réservoir de stockage d'ingrédients comprenant un élément de fermeture correspondant séparé (34, 134, 144, 520, 532, 551, 558, 591a- 596a) mobile sélectivement entre une position ouverte dans laquelle le réservoir de stockage d'ingrédients est ouvert à la chambre de cuisson et une position fermée dans laquelle le réservoir de stockage d'ingrédients est scellé de manière étanche vis-à-vis de la chambre de cuisson ;
ladite chambre de cuisson étant une chambre scellée de manière étanche, reliée de manière étanche aux réservoirs de stockage d'ingrédients de sorte que la chambre de cuisson et les réservoirs de stockage définissent un récipient sous pression ;
ledit appareil comprenant en outre un actionneur (148) permettant de déplacer la pluralité d'éléments de fermeture entre les positions ouvertes et fermées ;
ledit actionneur comprenant une pluralité de tiges poussoirs (150), chacune reliée à un élément de fermeture correspondant de la pluralité d'éléments de fermeture, lesdites tiges poussoirs étant mobiles entre une position rétractée dans laquelle ledit élément de fermeture correspondant est maintenue dans la position fermée et une position étendue dans laquelle l'élément de fermeture correspondant est amené à se déplacer vers la position ouverte ;
chaque élément de fermeture comprenant une soupape (162, 572, 581), et un déplacement de la tige poussoir correspondante vers la position étendue amenant la soupape à s'ouvrir créant un trajet de fluide entre la chambre de cuisson et le réservoir de stockage pour l'entrée de gaz dans la chambre de stockage.

2. Appareil de cuisson selon la revendication 1, ladite chambre de cuisson possédant une ouverture permettant l'accès à celle-ci, pouvant être fermée sélectivement par un élément de fermeture de chambre de cuisson scellé.

3. Appareil de cuisson selon la revendication 2, ladite pluralité de parois comprenant un couvercle amovible qui définit l'élément de fermeture de chambre de cuisson scellé.

4. Appareil de cuisson selon la revendication 3, lesdits réservoirs de stockage étant reliés au couvercle et s'étendant à travers celui-ci de sorte que lorsque le couvercle est fermé l'ouverture de chaque réservoir de stockage est contiguë et reliée de manière ouverte avec la chambre de cuisson lorsque l'élément de fermeture de réservoir de stockage correspondant est dans la position ouverte.

5. Appareil de cuisson selon l'une quelconque des revendications précédentes, chaque soupape étant reliée à la tige poussoir correspondante de sorte que lorsque la tige poussoir est dans la position rétractée, la soupape soit maintenue fermée.

6. Appareil de cuisson selon l'une quelconque des revendications précédentes, chaque tige poussoir comprenant un élément magnétique d'actionnement, ledit actionneur comprenant en outre une pluralité d'électro-aimants correspondant à la pluralité de tiges poussoirs et agencés à proximité de celles-ci, et ledit actionnement sélectif de chacun des électroaimants générant une force magnétique d'entraînement entre l' électro-aimant et l'élément magnétique d'actionnement correspondant amenant la tige poussoir correspondante à se déplacer vers la position étendue.

7. Appareil de cuisson selon la revendication 6, chaque tige poussoir comprenant un élément magnétique de positionnement positionné le long de sa longueur et agencé pour coopérer avec une partie ferromagnétique située sur le réservoir de stockage afin de maintenir et positionner la tige poussoir dans la position rétractée, la force de l'élément magnétique de positionnement étant choisie de sorte que la force de maintien entre l'élément magnétique de positionnement et la partie ferromagnétique
soit inférieure à la force d'entraînement entre l'élément magnétique d'actionnement et l'électro-aimant de sorte que la force d'entraînement surpasse la force de maintien afin de déplacer la tige poussoir vers la position étendue lorsque l'électro-aimant est activé.

8. Appareil de cuisson selon l'une quelconque des revendications précédentes, comprenant en outre un dispositif de commande permettant de commander sélectivement l'actionneur pour déplacer indépendamment les éléments de fermeture de réservoir de stockage vers la position ouverte à des intervalles prédéfinies pour distribuer sélectivement et séquentiellement les ingrédients.

9. Appareil de cuisson selon l'une quelconque des revendications précédentes, comprenant en outre une récipient de cuisson amovible situé à l'intérieur de la chambre de cuisson pour recevoir lors de l'utilisation les ingrédients distribués depuis les réservoirs de stockage d'ingrédients et les contenir durant la cuisson.

10. Appareil de cuisson selon la revendication 9, ledit moyen de chauffage comprenant une bobine d'induction et le récipient de cuisson étant constitué au moins en partie d'un matériau ferromagnétique.

11. Appareil de cuisson selon l'une quelconque des revendications 8 à 10, ladite chambre de cuisson possédant une soupape de surpression automatique commandée par le dispositif de commande pour réguler la pression dans la chambre de cuisson.

12. Appareil de cuisson selon l'une quelconque des revendications 8 à 11, ledit élément de chauffage étant commandé par le dispositif de commande pour réguler la chaleur appliquée aux ingrédients à l'intérieur de la chambre de cuisson.
